# EUROPEAN PATENT APPLICATION

(11) **EP 4 808 149 A1**
(43) Date of publication of application: **16.09.2026**
(21) Application number: 25163125.5
(22) Date of filing: 11.03.2025
(51) Int. Cl.: H04Q 9/00, H04W 4/38

(54) **MEASURING DEVICE**

(71) Applicant: Landis+Gyr GmbH, 90459 Nürnberg (DE)
(72) Inventor: Siegfried, Bär, Nürnberg (DE)
(74) Representative: Marks & Clerk LLP

(57) **Abstract**

There is provided a measuring device 1, comprising: a metrology module 2 arranged to measure consumption of a resource and to generate consumption data indicative of the consumption of the resource; a reconfigurable communication module 5 arranged to transmit data to a recipient device, wherein the recipient device is remote from the measuring device and the transmitted data comprises the consumption data; and a controller 4 arranged to reconfigure the communication module 5 such that the communication module adapts from transmitting data according to a first transmission standard to transmitting data according to a second transmission standard, wherein the second transmission standard is different from the first transmission standard.

## Description

### Technical Field

The present disclosure relates to a measuring device and a method of operating the same. More specifically but not exclusively, the present disclosure relates to a measuring device which is capable of transmitting data according to at least two or more transmission standards by using the same set of reconfigurable modules.

### Background

Generally, measuring devices (i.e., utility meters) measure the consumption of a resource, such as electricity, water, thermal energy or gas. Typically, measuring devices are installed at or near premises to measure consumption on the premises. A measuring device is typically provided by a service provider, which manages the measuring device as needed to ensure that the measuring device is fully operational and that accurate consumption measurements are taken. The measuring device may wirelessly report consumption data to a remote, centralized headend system (HES) that is in communication with and is responsible for services across a plurality of measuring devices. A high level of accuracy is required in the measuring and reporting of consumption because consumers are billed based on their consumption, as measured at the measuring device.

Various transmission standards may be used for the wireless transmission of consumption data from measuring devices to the HES. Examples of the transmission standards include Wireless Meter-Bus (hereinafter, 'wMBus') or Low Range Wide Area Network (hereinafter, 'LoRaWAN'). The wMBus standard is widely available in Europe and operates on three different frequencies, depending on the mode a meter or gateway uses. All three frequencies are sub-GHz, enabling signals to travel further and penetrate walls and buildings more effectively. The standard LoRaWAN is a Low Power Wide Area Networks (LPWAN) solution with widely available networks in around 25 countries at the current time. LoRaWAN is ideal for applications that transmit small size payloads with low bit rates, and is well suited for sensors and actuators that operate in low power mode.

It is generally desirable to improve the data transmission capability of a measuring device. It is an object of the present disclosure, among others, to provide a measuring device with an improved data transmission capability.

### Summary

According to a first aspect of the present disclosure, there is provided a measuring device, comprising: a metrology module arranged to measure consumption of a resource and to generate consumption data indicative of the consumption of the resource; a reconfigurable communication module arranged to transmit data to a recipient device, wherein the recipient device is remote from the measuring device and the transmitted data comprises the consumption data; and a controller arranged to reconfigure the communication module such that the communication module adapts from transmitting data according to a first transmission standard to transmitting data according to a second transmission standard, wherein the second transmission standard is different from the first transmission standard.

Advantageously, with the reconfigurable communication module and the controller, an operation mode of the communication module can be easily modified after fabrication such that the same communication module can transmit data to the recipient device according to any of two or more different transmission standards. This improves the data transmission capability (or the connectivity) of the measuring device without compromising the costs and weight/size of the measuring device, because the measuring device can be readily reconfigured post-fabrication to use a suitable transmission standard supported by available local networks without utilising additional software or hardware. In addition, the reconfigurable communication module and the controller allow the measuring device to operate in a dual-mode or a multi-mode in which the measuring device uses at least two transmission standards in an interleaving manner to transmit data. This increases the functionality as well as the data transmission capability of the measuring device.

It would be understood that the communication module may be reconfigured to transmit data according to further transmission standard(s) which are different from each of the first and second transmission standards.

The measuring device may also be referred to as a smart utility meter. The expression "transmission standard" may be used interchangeably with "transmission protocol".

It would be understood that the reconfigurable communication module may comprise a plurality of components, at least one of which being reconfigurable. It would further be understood that at least one of the components (e.g., antenna) within the reconfigurable communication module may not be reconfigurable at all.

The communication module may be arranged to wirelessly transmit data to the recipient device.

The controller may be arranged to control the communication module such that the communication module transmit data to the recipient device according to the first and second transmission standards in an interleaving manner.

The reconfigurable communication module may comprise a reconfigurable modulator.

The reconfigurable communication module may also comprise a reconfigurable front-end circuit.

The controller may be arranged to reconfigure the communication module by providing to the communication module reconfiguration data corresponding to the second transmission standard.

The first and second transmission standards may operate in the same frequency band.

The frequency band may be a Short Range Device, SRD, frequency band.

The frequency band may be between 863.0 MHz and 877.0 MHz.

The controller may be arranged to schedule future data transmissions which are to be transmitted according to the first and second transmission standards in an interleaving manner.

By scheduling the future data transmissions, the controller can foresee and pre-emptively resolve temporal conflicts between the future data transmissions.

The controller may be arranged to schedule the future data transmissions based upon a starting time and a duration of each of the future data transmissions.

The future data transmissions may comprise a first future data transmission according to the first transmission standard and a second future data transmission according to the second transmission standard. The first future data transmission may temporally overlap with the second future data transmission.

The controller may be arranged to modify a starting time of at least one of the first and second future data transmissions, such that the first and second future data transmissions with the modified transmission time no longer temporally overlap with one another.

To modify the starting time, the controller may be configured to delay a later one of the first and second future data transmissions by a period of time, such that the delayed data transmission no longer temporally overlaps with an earlier one of the first and second future data transmissions.

Alternatively, the controller may be arranged to select one of the first and second future data transmissions for transmission to the recipient device, and to cancel the other one of the first and second future data transmissions.

The selected future data transmission may be according to one of the first and second transmission standards which has a lower transmission frequency than the other one of the first and second transmission standards.

The selected future data transmission may be according to one of the first and second transmission standards which has a higher priority than the other one of the first and second transmission standards.

The selected future data transmission may be according to one of the first and second transmission standards, of which a historical transmission rate has not met a predetermined threshold.

The historical transmission rate may be defined as a number of successful transmissions per time period, or a percentage of successful transmissions within a time period.

The "successful transmissions" refer to those data transmissions which were not cancelled by the controller due to, e.g., temporal conflicts with other transmissions, and were sent by the communication module to the recipient device. The percentage of successful transmissions refers to a ratio of the number of the successful transmissions over the total number of submissions with the time period. The total number of submissions is a sum of the numbers of successful transmissions and cancelled submissions.

The controller may be arranged to, in response to selecting the first future data transmissions and cancelling the second future data transmission, reconfigure the communication module such that the communication module changes from the second operation mode to the first operation mode.

The first and second transmission standards may be selected from a group of transmission standards consisting of Wireless Meter-Bus in mode T, Wireless Meter-Bus in mode C, Wireless Meter-Bus in mode S, Wireless Meter-Bus in Mode N, LoRaWAN, MIOTY and Sigfox.

According to a second aspect of the present disclosure, there is provided a method of operating a measuring device, comprising: measuring, by a metrology module of the measuring device, a consumption of a resource; generating, by the metrology module, consumption data indicative of the consumption of the resource; reconfiguring, by a controller of the measuring device, a communication module of the measuring device such that the communication module changes from a first operation mode to a second operation mode, wherein, in the first operation mode, the communication module is operable to transmit data to a recipient device remote from the measuring device according to a first transmission standard, and in the second operation mode, the communication module is operable to transmit data to the recipient device according to a second transmission standard which is different from the first transmission standard; and after reconfiguring the communication module, transmitting, by the communication module, data to the recipient device according to the second transmission standard, wherein the data transmitted by the communication module to the recipient device comprises the consumption data.

The use of "based on" is meant to be open and inclusive, in that a process, step, calculation, or other action "based on" one or more recited conditions or values may, in practice, be based on additional conditions or values beyond those recited.

It would also be understood that the terms "first" and "second" are simply used in the present disclosure to label the relevant elements ("transmission standard", "future data transmission" etc.) for the ease of description, and do not imply any limitations to the sequence or the total number of the relevant elements.

Where appropriate any of the optional features described above in relation to one of the aspects of the present disclosure may be applied to another one of the aspects of the disclosure.

### Brief Description of the Drawings

In order that the disclosure may be more fully understood, a number of embodiments of the disclosure will now be described, by way of example, with reference to the accompanying drawings, in which:
Figure 1 is a schematic diagram of an example hardware architecture of a measuring device, according to an aspect of the present disclosure;
Figure 2 conceptually illustrates processing steps executed by a controller of the measuring device of Figure 1;
Figure 3 schematically illustrates an exemplary sequence of data transmissions in which there is no conflict between the data transmissions;
Figure 4 schematically illustrates another exemplary sequence of data transmissions in which there is a conflict between the data transmissions;
Figure 5 schematically illustrates an exemplary sequence of data transmissions which has been rescheduled by the controller of the measuring device of Figure 1 based upon the sequence of Figure 4;
Figure 6 schematically illustrates processing steps of a method of operating a measuring device, according to an aspect of the present disclosure.

In the figures, like parts are denoted by like reference numerals.

It will be appreciated that the drawings are for illustration purposes only and are not drawn to scale.

### Detailed Description of the Preferred Embodiments

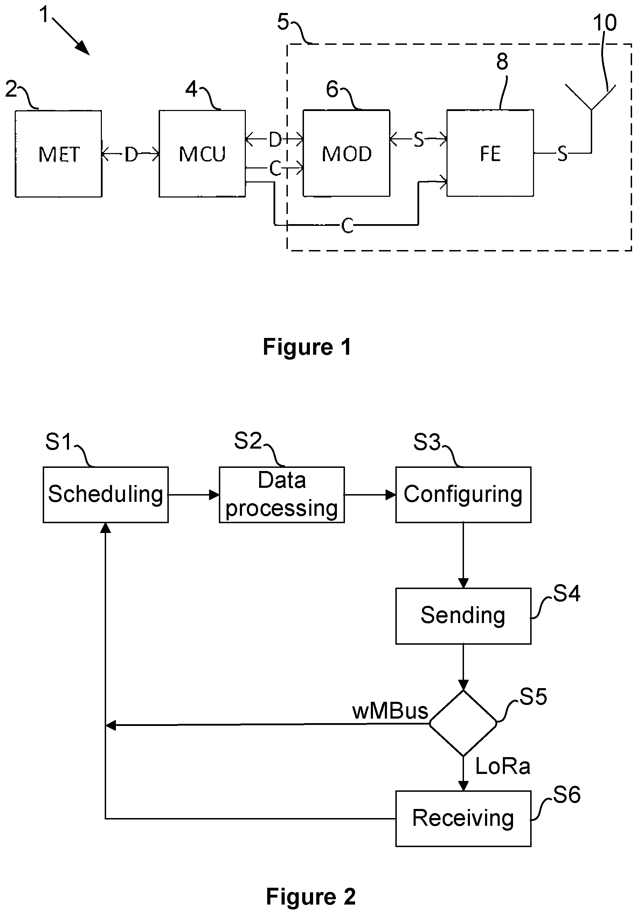

Figure 1 shows an example hardware architecture of a measuring device 1, according to an aspect of the present disclosure. As shown in Figure 1, the measuring device 1 includes a metrology module 2, a controller 4 and a reconfigurable communication module 5.

The metrology module 2 performs core metrology functions of measuring consumption of one or more resources, such as water, thermal energy (e.g., heat, cooling or combined heat/cooling), electricity, or gas, and generating consumption data (among other types of data if any) indicative of the consumption of the resource. The metrology module 2 may take any suitable form known to a skilled person in the art. The metrology module 2 may also include a metrology processor, which may be a microcontroller, for running metrology functions, and/or a memory for storing the consumption data.

The reconfigurable communication module 5 is for transmitting data to a recipient device (not shown in Figure 1) remote from the measuring device 1. The transmitted data includes the consumption data and may include other types of data from the metrology module 2. The recipient device may be a local smart meter gateway device or a base station. In an example, the data transmission between the reconfigurable communication module 5 and the recipient device is wireless.

The reconfigurable communication module 5 includes a modulator 6, a front-end circuit 8 and an antenna 10. The modulator 6 generates coded and modulated analog signals from digital data. The modulator 6 may amplify the analog signals too. The front-end circuit 8 performs signal conditioning on the analog signals generated by the modulator 6, and typically includes one or more analog filters. The antenna 10 is used to transmit and receive radio signals. In this example, the modulator 6 and the front-end circuit 8 are reconfigurable while the antenna 10 is not reconfigurable. With the expression "reconfigurable", it is meant that the functionality of the modulator 6 and the front-end circuit 8 (thus the functionality of the communication module 5) can be changed or modified after fabrication. In alternative example, the front-end circuit 8 may be not reconfigurable.

The controller 4 is able to reconfigure the communication module 5 such that the communication module 5 can transition from a first operation mode (in which it transmits data to the recipient device according to one transmission standard) to a second operation mode (in which the communication module 5 transmits data according to another, different, transmission standard). The controller 4 may also implement transmission status-specific functions in software. In an example the controller 4 takes the form of a microcontroller although other arrangements are possible.

In Figure 1, arrows with "D" show signal flows of digital data while "C" indicates reconfiguration data and "S" indicates analog signals. More specifically, the controller 4 receives data (including consumption data) in digital form from the metrology module 2 and provides the (processed) consumption data in digital form to the modulator 6. The modulator 6 provides coded and modulated analog signals to the front-end circuit 8, which provides conditioned analog signals to the antenna 10. The controller 4 provides reconfiguration data to the modulator 6 and the front-end circuit 8, thereby reconfiguring the functionality of the modulator 6 and the front-end circuit 8.

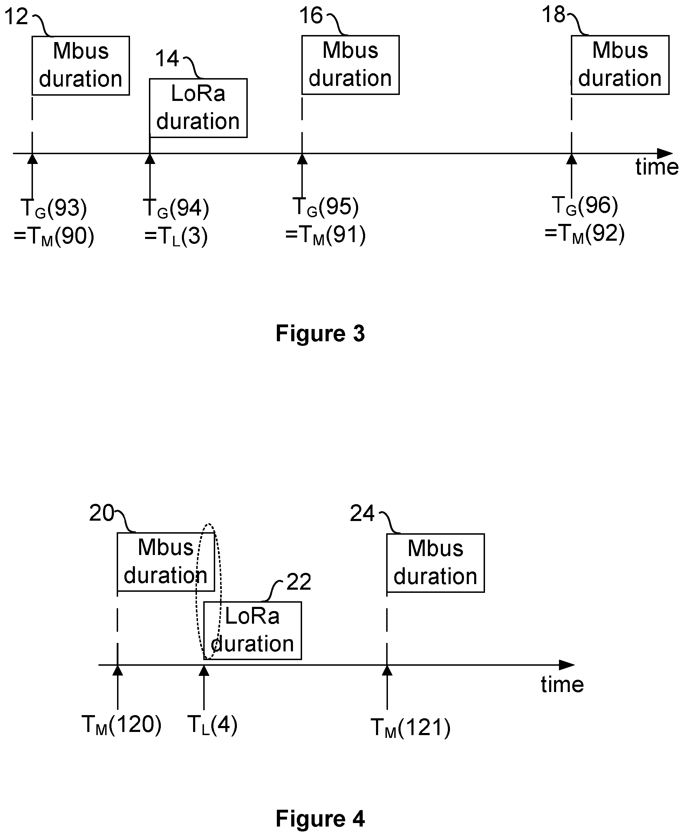

Implementation examples of the measuring device 1 are described below with reference to Figures 2 to 5. Figure 2 shows the conceptual steps executed by the controller 4. Figures 3 to 5 show various sequences of data transmissions according to two different transmission standards. In these examples, the controller 4 reconfigures the communication module 5 to use any one of two specific transmission standards. One of the transmission standards is wMBus in Mode C1. Mode C1 means that it is a unidirectional radio connection, i.e., the measuring device 1 only transmits. The other transmission standard is bidirectional LoRaWAN, whereby the measuring device 1 both transmits to and receives from a gateway. The two transmission standards use different modulations, with GSFK for wMBus and Chirp for LoRaWAN. The controller 4 reconfigures the modulator 6 so as to provide the modulations required. Both of the transmission standards operate in the Short Range Device (SRD) frequency band from 863.0 MHz to 877.0 MHz. Therefore, some of the hardware RF components (e.g., antenna 10, the band filter in the front-end circuit 8) of the communication module 5 can remain unchanged for the two transmission standards.

In the examples of Figures 2 to 5, the measuring device 1 operates in a dual-mode and transmits data to the recipient device according to both of the two specific transmission standards. This means that data transmissions according to the two specific transmission standards are interleaved. In other words, in the interim of two successive data transmissions according to one particular transmission standard, the communication module 5 is reconfigured to transmit data according to the other transmission standard. In this way, although only one transmission standard remains active on the communication module 5 at any time point, the communication module 5 is able to communicate with the recipient device according to both of the two specific transmission standards when viewed in the long run. The data sent according to the two different transmission standards may have the same content or may be different.

In an example, the communication module 5 sends out data packages M according to the transmission standard wMBus in Mode C1 at an interval of 30 seconds (so-called walk-by), and sends out data packages L according to the transmission standard LoRaWAN at a nominal interval of 15 minutes. Given the low transmission rate of the LoRaWAN standard, the communication module 5 can be readily reconfigured to transmit the data packages M according to the wMBus in Mode C1 standard during the interval of the data packages L, thereby allowing the measuring device 1 to operate in the dual-mode. There is a special timing requirement in the LoRaWAN transmission standard. In particular, a random jitter is superimposed on the transmission time. This means that the average interval between two successive transmissions according to LoRaWAN is 15 minutes, but each particular interval between two successive transmissions may be of any length between 10 and 20 minutes. Due to the presence of the random jitter, there is a possibility that the transmission of a data package L may collide with the transmission of a data package M. As described below in more detail, the controller 4 is equipped with a scheduling algorithm to foresee and to pre-emptively resolve any potential conflict between future transmissions of the packages L and M, thereby avoiding collisions of data transmissions between the different transmission standards. The expression "data package" may be used interchangeably with data message (DM).

With reference to Figure 2, the controller 4 run its scheduling algorithm at step S1, in order to decide which data package is to be sent by the communication module 5 at an upcoming transmission time T_{G}(z), and which transmission standard is to be used for the data package. The data package to be sent out is selected from a data package M(x) according to wMBus in Mode C1 and a data package L(y) according to LoRaWAN. The label 'z' is used to indicate the sequence of the transmission time T_{G} of the communication module 5. The labels 'x', 'y' are used to indicate the sequence of the data packages.

With further reference to Figure 3, the scheduling algorithm plans the upcoming transmission starting at T_{G}(93), by analysing the next transmission 12 (i.e., for transmitting a data package M(90) according to wMBus in Mode C1) and the next transmission 14 (i.e., for transmitting a data package L(3) according to LoRaWAN) for conflicts and sequence. The next transmission 12 has a starting time labelled as T_{M}(90) and a time duration indicated by a length of the transmission 12 along the time axis. The next transmission 14 has a starting time labelled T_{L}(3) and a time duration indicated by a length of the transmission 14 along the time axis. The duration of transmission (for both wMBus and LoRaWan) and reception (for LoRaWan only) shall be taken into account, as only one transmission standard can be active on the communication module 5 at any time point. As there are no conflicts (e.g., temporal overlap along the time axis) between the transmissions 12 and 14, the next transmission time T_{G}(93) is set to be equal to T_{M}(90) and wMBus in Mode C1 is selected as the transmission standard. The data to be sent according to wMBus in Mode C1 at T_{G}(93) is processed (e.g., compiled, formatted and/or encrypted) by the controller 4 at step S2. The controller 4 then reconfigures at step S3 the communication module 5 for transmission in accordance with wMBus in Mode C1. Steps S2 and S3 are completed in good time before the transmission time T_{G}(93). The processing then goes to step S4, where the controller 4 sends the processed data to the communication module 5 which transmits the data out as analog signals. Once transmission is complete, the processing goes back to step S1 to call the scheduling algorithm again.

The controller 4 now compares the next two transmissions for conflicts and sequence. The next two transmissions include the next transmission 14 (i.e., for transmitting the data package L(3) according to LoRaWAN) and the next transmission 16 (i.e., for transmitting a data package M(91) according to wMBus in Mode C1). The next transmission 16 has a starting time labelled as T_{M}(91) and a time duration indicated by a length of the transmission 16 along the time axis. As there is no conflict between the transmissions 14, 16, the next transmission time T_{G}(94) is set to be equal to T_{L}(3) and LoRaWan is selected as the transmission standard. The rest of the process is similar to those described in relation to T_{G}(93), except that the data processing and reconfiguration at steps S3 and S4 are in accordance with LoRaWAN. In addition, after sending the data L(3) according to LoRaWAN, the measuring device 1 shall wait for a response from the gateway. Therefore, the controller 4 has an extra step S6 during which the controller 4 is in receiving mode for a predetermined period of time. Once the receiving step S6 is completed, the processing goes back to step S1 to call the scheduling algorithm again. The processing cycle as shown in Figure 2 is repeated continuously. When the communication module 5 is reconfigured to transmit data according to wMBus in Mode C1, it can be said that the communication module 5 is in one of the first and second operation modes. When the communication module 5 is reconfigured to transmit data according to LoRaWAN, it can be said that the communication module 5 is in the other one of the first and second operation modes.

In the sequence of data transmissions as shown in Figure 3, there is no conflict between the future data transmissions. Figure 4 shows an alternative sequence of data transmissions where a conflict occurs. When the scheduling algorithm of the controller 4 plans the upcoming transmission T_{G}(123) at step S1 of Figure 2, the next two transmissions include the next transmission 20 (i.e., for transmitting a data package M(120) according to wMBus in Mode C1) and the next transmission 22 (i.e., for transmitting a data package L(4) according to LoRaWAN). The next transmission 20 has a starting time labelled as T_{M}(120) and a duration indicated by a length of the transmission 20 along the time axis. The next transmission 22 has a starting time labelled as T_{L}(4) and a duration indicated by a length of the transmission 22 along the time axis. As shown in Figure 4, the two future transmissions 20, 22 partially overlap in time. Thus, there will be a conflict between the two future transmissions 20, 22.

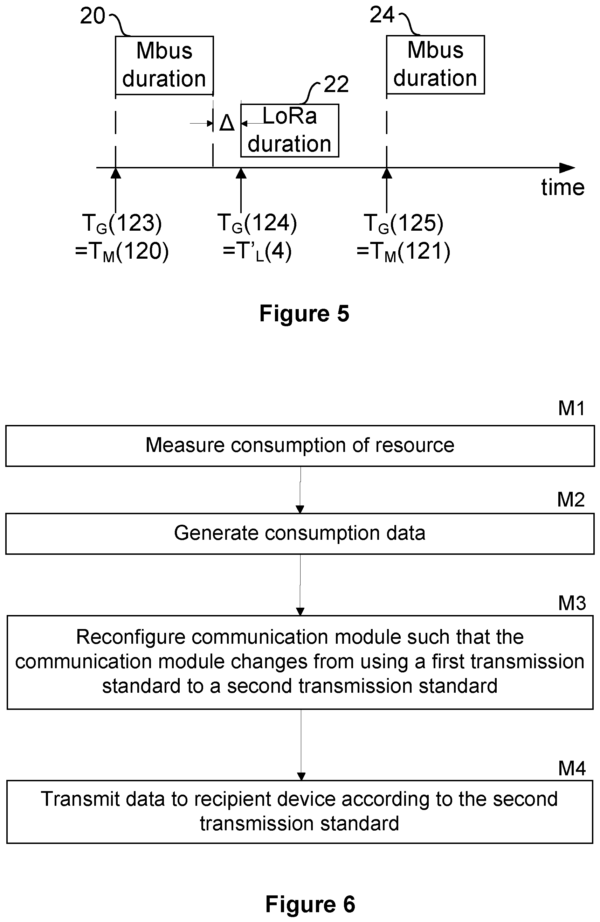

Figure 5 represents one solution for resolving the conflict, as implemented by the scheduling algorithm of the controller 4. In this solution, the next transmission 20 is selected for the transmission time T_{G}(123). That is, the next transmission time T_{G}(123) is set to be equal to T_{M}(120) and wMBus in Mode C1 is selected as the transmission standard. The scheduling algorithm of the controller 4 delays the starting time T_{L}(4) of the next transmission 22 to T'_{L}(4), so that the modified next transmission 22 fits between the transmissions 20 and 24 (both according to wMBus in Mode C1). In the next round, the scheduling algorithm of the controller 4 will set the transmission time T_{G}(124) to be equal to T'_{L}(4) and select LoRaWan as the transmission standard. With this solution, the later one of the conflicting two future transmissions is delayed so as to avoid any temporal overlap (i.e., overlap in time) there-between. It would be appreciated that the conflict may also be resolved by bringing the earlier one of the conflicting two future transmissions forward.

Alternatively, the conflict between the two future transmissions 20 and 22 may be resolved by selecting one of the two future transmissions and cancelling the other transmission without replacement. For example, with reference to Figure 4, the future data transmission 22 may be selected and the future data transmission 20 may be deleted without replacement. This means that once the scheduling algorithm of the controller 4 determines that there is a conflict between the two future transmissions 20, 22, the scheduling algorithm sets the next transmission time T_{G}(123) to be equal to T_{L}(4) and selects LoRaWan as the transmission standard. In the next round, the scheduling algorithm of the controller 4 will set the transmission time T_{G}(124) to be equal to T_{M}(121) and select wMBus in Mode C1 as the transmission standard, thereby selecting the data transmission 24. In this way, the data transmission 20 is simply omitted in view of the conflicts. Because the wMBus in Mode C1 standard uses a much higher transmission frequency, data increments are small and thus omitting one transmission is unlikely to cause any serious problem. Therefore, in the event of a conflict between two future transmissions, the selected transmission may be according to a transmission standard with a lower transmission frequency (e.g., LoRaWAN), and the omitted transmission may be according to a transmission standard with a higher transmission frequency (e.g., wMBus in Mode C1).

In the examples described above, the communication module 5 of the measuring device 1 operates in a dual-mode and can transmit data to the recipient device according to each of the wMBus in Mode C1 and LoRaWAN standards. It would be understood that the communication module 5 may operate according to other transmission standards and any number of their combinations, such as all operating modes of wMBus (e.g. T1, T2, C1, C2, S1, S2, whereby the x2 variants work bidirectionally), MIOTY, Sigfox and LoRaWAN. Modes T, C and S of wMBus as well as MIOTY, Sigfox and LoRaWAN can all operate in the SRD frequency band. Thus, the antenna 10 and a band filter of the front end circuit 8 may be used unchanged for all of the above described transmission standards. MIOTY is a LPWAN developed for large-scale industrial loT applications. MIOTY uses telegram splitting to divide data into subpackets, then transmits the packets at different times and frequencies, which helps reduce interference. With MIOTY, wMBus and LoRaWan, data is typically transmitted from each measuring device to a local smart meter gateway, which aggregates data from several meters in an area and then forwards it to the cloud. Sigfox may allow a measuring device to communicate directly with the cloud. It would be appreciated that the measuring device 1 may be modified such that the communication between the communication module 5 and the local smart meter gateway is a wired communication, while the communication between the local smart meter gateway and the cloud remains wireless.

Further, the communication module 5 of the measuring device 1 may be reconfigured to transmit data according to more than two of the transmission standards described above. In the event of conflicts between two (or more) future data transmissions, the scheduling algorithm of the controller 4 may be modified such that the selected transmission is according to a transmission standard which has a higher priority than the transmission standards associated with other conflicting transmissions. The priority of the transmission standards may be pre-set by a provider of the measuring device 1 or may be set by an operator in use. The priority of the transmission standards may also be determined by the controller 4 based upon factors such as a transmission frequency or a minimum number of transmissions within a defined time period for each transmission standard. In principle, higher priority applies to a transmission standard with less frequent transmissions. For some of the transmission standards, there may be a requirement that a minimum number of transmissions must take place within a defined time frame. For example, LoraWan has to be gated at least 5 times a day. Therefore, in the event of conflicts, if LoraWan has not delivered the minimum number of transmissions, LoraWan may be assigned with the highest priority by the controller 4.

Alternatively, in the event of conflicts between two (or more) future data transmissions, the scheduling algorithm of the controller 4 may be designed to guarantee a transmission rate for each transmission standard. The transmission rate may be defined as a minimum number of successful transmissions per time period, or percentage of successful transmissions within a time period. The "successful transmissions" refer to those which were not cancelled by the scheduling algorithm of the controller 4 in the event of conflicts. In other words, if there is a temporal conflict between two or more future data transmissions according to different transmission standards, the scheduling algorithm may look into the historical transmission rate for each of the involved transmission standards, and select the transmission standard of which the historical transmission rate has not met a predetermined threshold.

As described above, the measuring device 1 operates in a dual-mode or a multi-mode and transmits data to the recipient device according to two or more transmission standards simultaneously, by interleaving data transmissions which are according to the two or more transmission standards and also by resolving potential temporal conflicts between the data transmissions. Alternatively, the controller 4 may reconfigure the communication module 5 to use a particular one of the transmission standards, and consequently the communication module 5 may transmit data according to the particular transmission standard alone for a relatively long period of time (e.g., weeks, months or years). The reconfiguration may take place after the deployment of the measuring device 1, and the particular transmission standard may be selected based upon available networks in the neighbourhood of the measuring device 1, thereby allowing the measuring device 1 to have a reasonably good connectivity in its neighbourhood. This is useful if the original configuration of the communication module 5 is not compatible with the available networks nearby. Because the communication module 5 transmits data according to the particular transmission standard alone, the risks of conflicts between future data transmissions would be low. Therefore, the scheduling algorithm may be omitted from the controller 4.

Figure 6 schematically illustrates processing steps of a method of operating a measuring device (e.g., the measuring device 1).

At step M1, a metrology module (e.g., the metrology module 2) of the measuring device, a consumption of a resource (e.g., water, thermal energy (such as heat, cooling or combined heat/cooling), electricity, or gas).

At step M2, the metrology module generates consumption data indicative of the consumption of the resource.

At step M3, a controller (e.g., the controller 4) of the measuring device reconfigures a communication module (e.g., the communication module 5) of the measuring device such that the communication module changes from a first operation mode to a second operation mode. In the first operation mode, the communication module is operable to transmit data to a recipient device (e.g., a gateway or a base station) remote from the measuring device according to a first transmission standard. In the second operation mode, the communication module is operable to transmit data to the recipient device according to a second transmission standard which is different from the first transmission standard.

The first and second transmission standards may be selected from Wireless Meter-Bus in Mode T, Wireless Meter-Bus in Mode C, Wireless Meter-Bus in Mode S, Wireless Meter-Bus in Mode N, LoRaWAN, MIOTY and Sigfox. The communication module may be reconfigured by the controller to transmit data according to a further, different, transmission standard.

The processing then proceeds to step M4 in which the communication module transmits data to the recipient device according to the second transmission standard. The data transmitted by the communication module to the recipient device comprises the consumption data.

The terms "having", "containing", "including", "comprising" and the like are open and the terms indicate the presence of stated structures, elements or features but not preclude the presence of additional elements or features. The articles "a", "an" and "the" are intended to include the plural as well as the singular, unless the context clearly indicates otherwise.

Although the disclosure has been described in terms of preferred embodiments as set forth above, it should be understood that these embodiments are illustrative only and that the claims are not limited to those embodiments. Those skilled in the art will be able to make modifications and alternatives in view of the disclosure which are contemplated as falling within the scope of the appended claims. Each feature disclosed or illustrated in the present specification may be incorporated in the disclosure, whether alone or in any appropriate combination with any other feature disclosed or illustrated herein.

## Claims

1. A measuring device, comprising:
a metrology module arranged to measure consumption of a resource and to generate consumption data indicative of the consumption of the resource;
a reconfigurable communication module arranged to transmit data to a recipient device, wherein the recipient device is remote from the measuring device and the transmitted data comprises the consumption data; and
a controller arranged to reconfigure the communication module such that the communication module changes from a first operation mode to a second operation mode, wherein, in the first operation mode, the communication module is operable to transmit data to the recipient device according to a first transmission standard, and in the second operation mode, the communication module is operable to transmit data to the recipient device according to a second transmission standard which is different from the first transmission standard.

2. The measuring device of claim 1, wherein the controller is arranged to schedule future data transmissions which are to be transmitted according to the first and second transmission standards in an interleaving manner.

3. The measuring device of claim 2, wherein the controller is arranged to schedule the future data transmissions based upon a starting time and a duration of each of the future data transmissions.

4. The measuring device of claim 2 or 3, wherein the future data transmissions comprise a first future data transmission according to the first transmission standard and a second future data transmission according to the second transmission standard, and wherein the first future data transmission temporally overlaps with the second future data transmission.

5. The measuring device of claim 4, wherein the controller is arranged to modify a starting time of at least one of the first and second future data transmissions, such that the first and second future data transmissions with the modified transmission time no longer temporally overlap with one another.

6. The measuring device of claim 4, wherein the controller is arranged to select one of the first and second future data transmissions for transmission to the recipient device, and to cancel the other one of the first and second future data transmissions.

7. The measuring device of claim 6, wherein the selected future data transmission is according to one of the first and second transmission standards which has a lower transmission frequency than the other one of the first and second transmission standards.

8. The measuring device of claim 6, wherein the selected future data transmission is according to one of the first and second transmission standards which has a higher priority than the other one of the first and second transmission standards.

9. The measuring device of claim 6, wherein the selected future data transmission is according to one of the first and second transmission standards, of which a historical transmission rate has not met a predetermined threshold.

10. The measuring device of any preceding claim as dependent from claim 6, wherein the controller is arranged to, in response to selecting the first future data transmissions and cancelling the second future data transmission, reconfigure the communication module such that the communication module changes from the second operation mode to the first operation mode.

11. The measuring device of any preceding claim, wherein the first and second transmission standards are selected from a group of transmission standards consisting of Wireless Meter-Bus in Mode T, Wireless Meter-Bus in Mode C, Wireless Meter-Bus in Mode S, Wireless Meter-Bus in Mode N, LoRaWAN, MIOTY and Sigfox.

12. The measuring device of any preceding claim, wherein the reconfigurable communication module comprises a reconfigurable modulator.

13. The measuring device of any preceding claim, wherein the controller is arranged to reconfigure the communication module by providing to the communication module reconfiguration data corresponding to the second transmission standard.

14. A method of operating a measuring device, comprising:
measuring, by a metrology module of the measuring device, a consumption of a resource;
generating, by the metrology module, consumption data indicative of the consumption of the resource;
reconfiguring, by a controller of the measuring device, a communication module of the measuring device such that the communication module changes from a first operation mode to a second operation mode, wherein, in the first operation mode, the communication module is operable to transmit data to a recipient device remote from the measuring device according to a first transmission standard, and in the second operation mode, the communication module is operable to transmit data to the recipient device according to a second transmission standard which is different from the first transmission standard; and
after reconfiguring the communication module, transmitting, by the communication module, data to the recipient device according to the second transmission standard, wherein the data transmitted by the communication module to the recipient device comprises the consumption data.
